# EUROPÄISCHE PATENTSCHRIFT

(11) **EP 3 720 632 B1**
(45) Veröffentlichungstag und Bekanntmachung des Hinweises auf die Patenterteilung: **15.05.2024**
(21) Anmeldenummer: 18789353.2
(22) Anmeldetag: 15.10.2018
(51) Int. Cl.: B05B 1/00, B41J 2/00, B33Y 10/00, B29C 64/393, B22D 23/00, B22F 3/00, B22F 10/22, B22F 10/32, B22F 12/53

(54) **VERFAHREN ZUM BETREIBEN EINER VORRICHTUNG ZUR ADDITIVEN FERTIGUNG VON DREIDIMENSIONALEN WERKSTÜCKEN**
METHOD FOR OPERATING A DEVICE FOR THE ADDITIVE MANUFACTURE OF THREE-DIMENSIONAL WORKPIECES
PROCÉDÉ POUR LE FONCTIONNEMENT D'UN DISPOSITIF POUR LA FABRICATION ADDITIVE DE PIÈCES TRIDIMENSIONNELLES

(30) Priorität: 07.12.2017 DE 102017222162
(43) Veröffentlichungstag der Anmeldung: 14.10.2020
(73) Patentinhaber: Robert Bosch GmbH, 70442 Stuttgart (DE)
(72) Erfinder: MAIER, Eberhard, 73257 Koengen (DE); SCHWEIZER, Benjamin, 72160 Horb (DE)
(86) Internationale Anmeldenummer: PCT/EP2018/078035
(87) Internationale Veröffentlichungsnummer: WO 2019/110170

(56) Entgegenhaltungen:
- CN-A- 105 945 285
- US-A1- 2009 219 319
- US-A1- 2017 087 632
- TAIK-MIN LEE ET AL: "Drop-on-Demand Solder Droplet Jetting System for Fabricating Microstructure", IEEE TRANSACTIONS ON ELECTRONICS PACKAGING MANUFACTURING, IEEE, PISCATAWAY, NY, US, Bd. 31, Nr. 3, 1. Juli 2008 (2008-07-01), Seiten 202-210, XP011229699, ISSN: 1521-334X, DOI: 10.1109/TEPM.2008.926285

## Beschreibung

Die Erfindung betrifft ein Verfahren zum Betreiben einer Vorrichtung zur additiven Fertigung von dreidimensionalen Werkstücken.

### Stand der Technik

Bei einer Vielzahl von Fertigungsverfahren, wie beispielsweise dem 3D-Druck oder dem Schutzgasschweißen, werden reaktionsträge oder chemisch inerte Gase, eingesetzt, um eine unerwünschte Reaktion eines oxidationsempfindlichen Werkstoffs, insbesondere eines Metalls, mit Luftsauerstoff zu verhindern. Übliche als Schutzgase einsetzbare Gase sind beispielsweise Stickstoff, Argon, Helium, Kohlenstoffdioxid oder Mischungen aus diesen. Bei einem Schutzgas kann es sich demnach sowohl um ein Gas, als auch um eine Gasmischung handeln. Das Schutzgas wird üblicherweise in externen Tanks oder Flaschen bevorratet und über ein 2/2-Wegeventil zugeführt.

Die zum Zeitpunkt dieser Anmeldung noch nicht veröffentlichte Schrift DE102016224047 zeigt einen Druckkopf für einen 3D-Drucker, insbesondere Metalldrucker, umfassend ein Gehäuse, eine Vorrichtung zur Zuführung eines Metalls, einen Kolben, ein Reservoir mit einer Austrittsöffnung und eine Aktorvorrichtung zur Verschiebung des Kolbens.

Sie zeichnet sich dadurch aus, dass das Reservoir einen Schmelzbereich und einen Verdrängerraum für eine flüssige Phase des Metalls aufweist, wobei der Schmelzbereich an einer inerten Atmosphäre angrenzt und mit dem Verdrängerraum derart verbunden ist, dass durch die Verschiebung des Kolbens die flüssige Phase des Metalls zum Durchtritt durch die Austrittsöffnung anregbar ist.

Gegenüber thermoplastischen Kunststoffen haben Metalle einen wesentlich höheren Schmelzpunkt und zugleich im flüssigen Zustand eine wesentlich geringere Viskosität, wodurch die zur Tropfenerzeugung nötigen Aktorimpulse energieaufwendig sind. Das Einstellen der inerten Atmosphäre wird nicht näher beschrieben.

CN 105 945 284 A offenbart einen Drop-on-Demand (DoD) Druckkopf zur additiven Fertigung von Werkstücken aus Metall, wobei der Druckkopf einen Schmelzbereich aufweist, an dem eine inerte Gasatmosphäre angrenzt. US 2017/087632 A1 offenbart eine Fused Deposition Modeling (FDM) Vorrichtung zur additiven Fertigung von Werkstücken aus Metall, wobei der Druckkopf einen Schmelzbereich aufweist, an dem eine inerte Gasatmosphäre angrenzt. "Drop-on-Demand Solder Droplet Jetting System for Fabricating Microstructure", TAIK-MIN LEE et al. offenbart ein Drop-on-Demand- Geräte und Verfahren, bei dem die Tropfen durch den Gasdruck im Druckkopf gesteuert werden.

Der Erfindung liegt die Aufgabe zugrunde, ein Verfahren zum Betreiben einer Vorrichtung zur additiven Fertigung von dreidimensionalen Werkstücken bereitzustellen, die die nötige Energie der Aktorimpulse verringern, einen stabilen Druckprozess ermöglichen und die Lebensdauer des Druckkopfes erhöhen.

### Offenbarung der Erfindung

Die Aufgabe wird durch das Verfahren zum Betreiben eines Druckkopfes gemäß Anspruch 1 erfüllt.

Die Vorrichtung zum Betreiben des erfindungsgemäßen Verfahrens zur additiven Fertigung von dreidimensionalen Werkstücken, wobei die Vorrichtung ein 3D-Metalldrucker ist, umfasst einen Druckkopf und eine Vorrichtung zur Erzeugung einer inerten Atmosphäre innerhalb des Druckkopfes durch ein Gas, wobei der Druckkopf ein Gehäuse, eine Vorrichtung zur Zuführung eines Metalls, einen Kolben, ein Reservoir mit einer Austrittsöffnung und eine Aktorvorrichtung zur Verschiebung des Kolbens umfasst, wobei das Reservoir einen Schmelzbereich und einen Verdrängerraum für eine flüssige Phase des Metalls aufweist, wobei der Schmelzbereich an der inerten Atmosphäre angrenzt und mit dem Verdrängerraum derart verbunden ist, dass durch die Verschiebung des Kolbens die flüssige Phase des Metalls zum Durchtritt durch die Austrittsöffnung anregbar ist, wobei die Vorrichtung zur Erzeugung einer inerten Atmosphäre außerhalb des Druckkopfes angeordnet ist, wobei sie einen Speicher, zumindest ein Mittel zur Druckregelung und eine Gasleitung umfasst.

Die Vorrichtung zur Zuführung des Metalls sorgt für eine einfache Zuführung des Werkstoffs, wodurch bedarfsgerecht Werkstoff nachgeführt werden kann und der Druckkopf dadurch beispielsweise industriell einsetzbar ist. Zudem kann beispielsweise nach Leerung des Reservoirs ein anderer geeigneter Werkstoff zugeführt werden.

Der Schmelzbereich grenzt an der inerten Atmosphäre an. Dadurch wird sichergestellt, dass der Druck der inerten Atmosphäre direkt auf die Schmelze ausgeübt wird, wodurch sich die Druckqualität optimieren lässt. Ferner sorgt die inerte Atmosphäre in vorteilhafter Weise dafür, dass keine ungewünschte chemische Reaktion, wie beispielweise eine Oxidation der Schmelze, im Reservoir stattfindet. Beispielsweise kann die inerte Atmosphäre aus Stickstoff oder einem anderen Gas, bzw. Inertgas gebildet sein.

Das Reservoir weist den Schmelzbereich zum Schmelzen des Metalls, wobei dieser an der inerten Atmosphäre angrenzt und zusätzlich den Verdrängerraum auf. Dadurch ist es möglich den Schmelzvorgang räumlich von dem Verdränger-, bzw. Druckvorgang zu trennen, wodurch die Reproduzierbarkeit der Tropfen, bzw. eines Bauteils verbessert wird. Dabei ist die im Verdrängerraum vorhandene flüssige Phase des Metalls durch die Verschiebung des Kolbens zum Durchtritt durch die Austrittsöffnung anregbar. Die Schmelze, bzw. flüssige Phase des Metalls gelangt entweder über Schweredruck oder über eine Kombination des Schweredrucks und des Drucks des Inertgases vom Schmelzbereich in den Verdrängerraum. Die Austrittsöffnung entspricht einer Düse und ist je nach Aufbau des Reservoirs austauschbar.

Die Vorrichtung zur Erzeugung der inerten Atmosphäre ist außerhalb des Druckkopfes angeordnet, wodurch sich der Speicher, das zumindest eine Mittel zur Druckregelung und die Fluidverbindung räumlich vom Druckkopf trennen lassen und die Bauteile in vorteilhafter Weise der Temperatur des Druckkopfes direkt ausgesetzt sind und sich die Bauteile dadurch nicht erhitzen.

Die Aktorvorrichtung ist durch einen piezoelektrischen Aktor gebildet. Ein solcher Aktor reagiert sehr schnell auf eine elektrische Ansteuerung mit einer Längenänderung. Dabei kann er eine große Kraft von bis zu mehreren 100 Newton ausüben. Der maximale Hub liegt typischerweise in der Größenordnung von 50-80 µm. Ein Aktuierungskonzept mittels piezoelektrischem Aktor ermöglicht in vorteilhafter Weise eine sehr genaue Reproduzierbarkeit der Tropfen. Zudem ist die Größe der Tropfen bei einem gleichbleibenden Düsendurchmesser flexibel regelbar. Mit dem piezoelektrischen Aktor sind sehr hohe Frequenzen (von bis beispielsweise 1000Hz), wodurch eine sehr hohe Aufbaurate der gewünschten 3D Struktur möglich ist. Zudem ist eine Automatisierbarkeit des ganzen Aufbaus gegeben.

In einer Weiterbildung ist die Gasleitung der Vorrichtung zur Erzeugung der inerten Atmosphäre über eine Leitung mit dem Reservoir verbunden, wobei die Leitung innerhalb einer Isolierplatte des Druckkopfes angeordnet ist.

Die Isolierplatte ist in vorteilhafter Weise aus einem wärmeisolierenden Material gebildet und derart ausgebildet, dass sie einen Wärmeübergang vom Reservoir zum Kühlflansch vermindert. Der Einsatz der Isolierplatte ermöglicht ein geeignetes Temperaturmanagement und einen dauerhaften Betrieb des Druckkopfs. Ferner reduziert die Isolation den Energieeinsatz und vereinfacht die Temperaturregelung des Druckkopfs. Die Isolierplatte ist beispielsweise aus einer Keramik mit geringer thermischer Wärmeleitfähigkeit gebildet, wie beispielsweise Zirkoniumoxid. Es sind auch poröse Keramiken oder beispielsweise Silikatkeramiken einsetzbar.

In einer Weiterbildung weist die inerte Atmosphäre innerhalb des Reservoirs einen höheren Druck auf, als der Umgebungsdruck außerhalb des Druckkopfes, wobei der Druck über das zumindest eine Mittel zur Druckregelung regelbar ist. Der relativ zum Umgebungsdruck überhöhte Druck innerhalb des Reservoirs sorgt in vorteilhafter Weise für einen gleichmäßigen Druck auf die flüssige Phase des Metalls, bzw. der Schmelze, wodurch der Druckprozess des Kolbens unterstützt, bzw. der zur Erzeugung von Tropfen notwendige Kolbendruck verringert wird. Dadurch findet in vorteilhafter Weise eine mechanische Entlastung des Kolbens statt und zudem wird weniger Energie zur Erzeugung eines Hubes benötigt. Durch den definierten Überdruck auf die Schmelze, insbesondere Metallschmelze, wird die notwendige Energie des Aktorimpulses reduziert. Ein zusätzlicher Vorteil ist, dass durch einen definierten Überdruck in der Druckkammer die Menge der abgelösten flüssigen Phase des Metalls, bzw. die Tropfengröße und -menge beeinflusst werden können.

In Weiterbildungen ist das Mittel zur Druckregelung aus einem Druckregelventil und / oder einer regelbaren Drossel gebildet. Je nach Anwendungsfalls ist es von Vorteil ein elektrisches Druckregelventil oder eine elektrisch regelbare Drossel einzusetzen.

Bei dem vorgeschlagenen Verfahren zum Betreiben einer Vorrichtung zur additiven Fertigung von dreidimensionalen Werkstücken, insbesondere während eines Druckvorgangs durch Emittierung von einzelnen Tropfen, wird erfindungsgemäß der Druck der inerten Atmosphäre derart über das Mittel zur Druckregelung geregelt, dass der Druck der inerten Atmosphäre über dem Umgebungsdruck und unter einem Grenzdruck liegt, der ein Emittieren von Tropfen durch die Austrittsöffnung des Druckkopfes verursacht.

Der relativ zum Umgebungsdruck höhere Druck der inerten Atmosphäre bietet eine Druckunterstützung für den Kolben, wodurch in vorteilhafter Weise der Energieaufwand zur Aufbringung des Kolbenhubes verringert wird und der Druckprozess stabilisiert wird. In vorteilhafter Weise liegt der Druck unter dem Grenzdruck, der einen Ausstoß von Tropfen aus der Austrittsöffnung verursachen würde, ohne dass der Kolben einen Hub ausübt. Dadurch ist gewährleistet, dass nur Tropfen ausgestoßen werden, wenn der Kolben durch den Aktor beaufschlagt wird.

Ferner wird erfindungsgemäß während eines Befüllvorgangs eines Werkstücks, der Druck der inerten Atmosphäre derart über das Mittel zur Druckregelung geregelt, dass der Druck über dem Umgebungsdruck und über dem Grenzdruck liegt, der ein Emittieren von Tropfen durch die Austrittsöffnung verursacht, so dass die flüssige Phase des Metalls durch den von der inerten Atmosphäre ausgeübten Druck durch die Austrittsöffnung emittiert wird.

Der relativ zum Umgebungsdruck höhere Druck der inerten Atmosphäre bietet die Möglichkeit, dass der Druckkopf einen kontinuierlichen Ausstoß der flüssigen Phase des Metalls, bzw. der Schmelze erzeugt, wobei der Druck der inerten Atmosphäre über dem Grenzdruck zum Ausstoß von Tropfen liegt und zwar derart, dass die flüssige Phase des Metalls, bzw. die Schmelze aus der Austrittsöffnung in einen Hohlraum eines Werkstücks gedrückt wird. Dazu wird der Hub des Kolbens unterbrochen. Der Kolben kann während der Befüllung des Werkstücks sowohl in als auch außerhalb der Schmelze positioniert sein. Durch diese Möglichkeit können Bereiche in einem Werkstück, bzw. in einem 3D-Druckteil sehr schnell aufgefüllt werden, was die Druckzeit in vorteilhafter Weise erheblich minimiert.

Die Kombination ermöglicht in vorteilhafter Weise einen schnellen Aufbau eines Werkstücks.

Während eines Entleerungsvorgangs des Druckkopfes, wird der Druck der inerten Atmosphäre derart über das Mittel zur Druckregelung geregelt, dass der Druck über dem Umgebungsdruck und über dem Grenzdruck liegt, der ein Emittieren von Tropfen durch die Austrittsöffnung verursacht, so dass die flüssige Phase des Metalls durch den von der inerten Atmosphäre ausgeübten Druck durch die Austrittsöffnung emittiert wird, wobei das Reservoir und der Verdrängerraum durch das Gas gespült werden.

Der relativ zum Umgebungsdruck höhere Druck der inerten Atmosphäre bietet die Möglichkeit, dass die Schmelze aus dem Druckkopf möglichst vollständig entfernt wird, wobei der Druck der inerten Atmosphäre über dem Grenzdruck zum Ausstoß von Tropfen liegt und zwar derart, dass die flüssige Phase des Metalls, bzw. die Schmelze kontinuierlich aus der Austrittsöffnung gedrückt wird. Dazu ist kein zusätzlicher Hub des Kolbens notwendig. Dieser sollte während des Entleerungsvorgangs außerhalb der Schmelze positioniert sein damit keine Reste der flüssigen Phase des Metalls am Stempel verbleiben.

Die Entleerung des Druckkopfes, bzw. des Reservoirs und des Verdrängerraums, findet statt, indem die noch im Druckkopf befindliche Schmelze, bevorzugt am Ende eines Druckvorgangs, aus dem Druckkopf gespült wird, indem das Inertgas mit einem Überdruck, bzgl. des Umgebungsdrucks des Druckkopfes in den Druckkopf eingebracht wird. Dadurch werden in vorteilhafter Weise Spannungen in den mit Schmelze in Berührung kommenden Bauteilen des Druckkopfes vermieden, wodurch die Lebensdauer des Druckkopfes stark erhöht wird.

Weitere, die Erfindung verbessernde Maßnahmen werden nachstehend gemeinsam mit der Beschreibung des bevorzugten Ausführungsbeispiels der Erfindung anhand von der Figur näher dargestellt.

### Kurze Beschreibung der Zeichnung

Es zeigt:

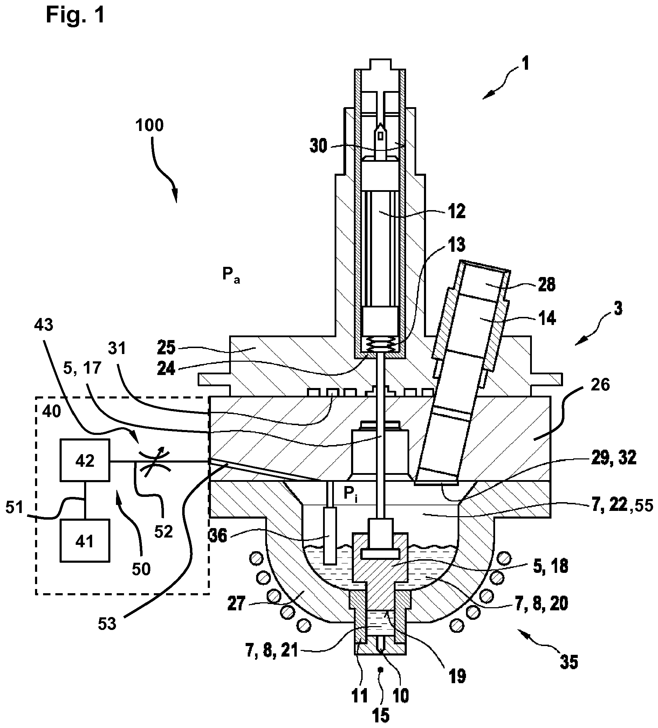

- Figur 1: Ein Ausführungsbeispiel der Vorrichtung zum Betreiben des erfindungsgemäßen Verfahrens.

### Ausführungsbeispiel

Die Figur zeigt ein Ausführungsbeispiel einer Vorrichtung 100 zur additiven Fertigung von dreidimensionalen Werkstücken, insbesondere einen 3D-Metalldrucker.

Die Vorrichtung 100 umfasst einen Druckkopf 1 und eine Vorrichtung 40 zur Erzeugung einer inerten Atmosphäre 22 innerhalb des Druckkopfes 1 durch ein Gas 55, insbesondere Inertgas. Der Druckkopf 1 umfasst ein Gehäuse 3, eine Vorrichtung 28 zur Zuführung eines Metalls 14 in fester Phase, einen Kolben 5, ein Reservoir 7, 27 mit einer Austrittsöffnung 10 und eine Aktorvorrichtung 12 zur Verschiebung des Kolbens. Das Reservoir 7, 27 weist einen Schmelzbereich 20 und einen Verdrängerraum 21 für eine flüssige Phase 8 des Metalls 14 auf, wobei der Schmelzbereich 20 an der inerten Atmosphäre 22 angrenzt und mit dem Verdrängerraum 21 derart verbunden ist, dass durch die Verschiebung des Kolbens 5 die flüssige Phase 8 des Metalls 14 zum Durchtritt durch die Austrittsöffnung 10 anregbar ist. Die flüssige Phase 8 des Metalls 14 wird auch als Schmelze 8 bezeichnet und die inerte Atmosphäre 22 ist durch Einleitung des Inertgases 55 in das Reservoir 7, 27 gebildet. Die Einleitung des Inertgases 55 findet bevorzugt über einen kalten Bereich des Druckkopfes 1 in das Reservoir 7, 27 statt.

Das Gehäuse 3 ist mehrteilig ausgebildet, wobei es zumindest einen Kühlflansch 25, die Isolierplatte 26 und das Reservoir 7, 27 umfasst.

Die Vorrichtung 40 zur Erzeugung der inerten Atmosphäre 22 ist außerhalb des Druckkopfes 1 angeordnet, wobei sie einen Speicher 41, insbesondere Druckspeicher für das Gas 55, zumindest ein Mittel 42, 43 zur Druckregelung und eine Gasleitung 50, 51, 52 umfasst. Das Mittel 42, 43 zur Druckregelung ist in der dargestellten Ausführungsform aus einem elektrischen Druckregelventil 41 und einer elektrisch regelbaren Drossel 42 gebildet. Es ist auch möglich, entweder nur das elektrische Druckregelventil 42 oder nur die elektrisch regelbare Drossel 43 zur Druckregelung der inerten Atmosphäre 22 im Reservoir 7, bzw. innerhalb des Druckkopfes einzusetzen.

Ferner ist die Gasleitung 50, 51, 52 der Vorrichtung 40 zur Erzeugung der inerten Atmosphäre 22 über eine Leitung 53 mit dem Reservoir 7 verbunden, wobei die Leitung 53 innerhalb der Isolierplatte 26 des Druckkopfes 1 angeordnet ist. Über nicht dargestellte Anschlussadapter lässt sich die Vorrichtung 40 zur Erzeugung der inerten Atmosphäre 22 mittels der außerhalb des Druckkopfes 1 angeordneten Gasleitung 50, 51, 52 an die Leitung 53 des Druckkopfes 1 anschließen. Die Leitung 53 innerhalb der Isolierplatte 26 ist bevorzugt als Durchgangsbohrung ausgelegt.

Der Kolben 5 ist mehrteilig ausgebildet, wobei er zumindest eine Kolbenstange 17 aus einem metallischen Werkstoff und einen Stempel 18 aus Keramik umfasst. Die Kolbenstange 17 ragt ausgehend von der Aktorvorrichtung 12 durch den Kühlflansch 25 und der Isolierplatte 26 bis in das Reservoir 7, 27 hinein, wo sie in den Stempel 18 übergeht.

Der Kühlflansch 25 weist eine Ausnehmung 30 zur Aufnahme der Aktorvorrichtung 12, die als piezoelektrischer Aktor 12 ausgebildet ist, auf. Der piezoelektrische Aktor 12 ist während des Betriebs in der Ausnehmung 30 derart fixiert, dass er bei Anliegen einer Spannung einen Arbeitshub auf den Kolben 5, speziell auf die Kolbenstange 17 des Kolbens, ausübt. Die Kolbenstange 17 überträgt den Arbeitshub auf den Stempel 18, so dass dieser die flüssige Phase 8 des Metalls 14 zum Durchtritt durch die Austrittsöffnung 10 anregt. Der Kolben 5 ist ohne Aktuierung des Aktors 12 durch eine Feder 13 in eine Ausgangsstellung rückstellbar, wobei die Feder 13 in der Ausnehmung 30 des Kühlflanschs 25 zwischen einem Absatz 24 und dem Aktor 12 angeordnet ist. Die Feder 13 ist als Tellerfeder ausgebildet.

Ferner weist der Kühlflansch 25 Kühlkanäle 31 zur Kühlung auf. Die Kühlkanäle 31 sind zwischen dem Kühlflansch 25 und der Isolierplatte 26 angeordnet und werden mit einem Kühlmedium durchspült. Dies dient als Kühlung gegenüber der Erwärmung durch die Schmelze 8 und zum Kühlen des Aktors 12 im Betrieb. Der Kühlflansch 25 ist aus einem metallischen Werkstoff gebildet.

Die an dem Kühlflansch 25 auf Seiten der Kühlkanäle 31 anliegende Isolierplatte 26 ist aus einem wärmeisolierenden Material gebildet und derart ausgebildet, dass sie einen Wärmeübergang vom Reservoir 7, 27 zum Kühlflansch 25 vermindert.

Die Vorrichtung 28 zur Zuführung des Metalls 14 mündet in das Reservoir 7, 27 und ist in dem Kühlflansch 25 und der Isolierplatte 26 angeordnet. Die Vorrichtung 28 ragt durch den Kühlflansch 25 und der Isolierplatte 26 hindurch und das Metall 14, bzw. das zu druckende Material 14 ist von außen durch die Vorrichtung 28 zuführbar. Bevorzugt können vordosierte Materialstücke, bzw. Pellets verwendet werden. Am Übergang der Isolierplatte 26 zum Reservoir 7, 27 befindet sich eine Öffnung 29 durch die das Material 14 in das Reservoir 7, 27 gelangt. Die Öffnung 29 ist durch eine Vorrichtung 32 verschließbar, so dass diese bevorzugt nur bei Zuführung des Materials 14 geöffnet ist, wodurch das Entweichen von Energie, bzw. Gas aus der inerten Atmosphäre 22 verringert wird.

Das Reservoir 7, 27 ist als Schmelztiegel 27 ausgebildet, wobei außerhalb des Schmelztiegels 27 ein Induktor 35 und innerhalb des Schmelztiegels ein Sensor 36, insbesondere ein Temperatursensor, angeordnet sind. Zwischen dem Schmelztiegel 27 und dem Induktor 35, bzw. der Induktor Spule 35 kann sich optional noch ein nicht dargestellter Isolator befinden.

Das Metall 14 gelangt in einer festen Phase 14 in den Schmelzbereich 20 des Schmelztiegels und wird durch den Induktor 35 erhitzt, bis es in eine flüssige Phase 8 übergeht. Bei Erreichen einer gewünschten Prozesstemperatur der Schmelze 8, die durch den Temperatursensor 36 ermittelt wird, kann der Druckkopf 1 den Betrieb aufnehmen. Die flüssige Phase 8, bzw. die Schmelze 8 gelangt durch Schweredruck der Schmelze 8 oder durch eine Kombination aus Schweredruck und Atmosphärendruck des Inertgases 22 am Stempel 18 vorbei in den Verdrängerraum 21. Der Stempel 18 des Kolbens 5 ist mit einer Druckseite 19 in der Schmelze 8, bzw. von Schmelze 8 umgeben und an der Verbindungsseite zur Kolbenstange 17 in der inerten Atmosphäre 22, bzw. von der inerten Atmosphäre 22 umgeben. Die Kolbenstange 17 kommt prozessbedingt nicht mit der Schmelze 8 in Berührung.

Die Keramik des Stempels 18 ist vorteilhafterweise sehr gut temperaturleitend, um die durch den Induktor 35 erzeugte Wärme gut in den Verdrängerraum 21 übertragen zu können.

Bei Aktuierung des piezoelektrischen Aktors 12 übt die Druckseite 19 des Stempels 18 einen Druck auf die Schmelze 8 im Verdrängerraum 21 in Richtung der Austrittsöffnung 10 aus und sorgt für einen Ausstoß eines Tropfens 15 durch die Austrittsöffnung 10 des Reservoirs 7, 27, bzw. des Verdrängerraums 21. Die Austrittsöffnung 10 ist für den Ausstoß von Tropfen 15 der flüssigen Phase 8 des Metalls 14 ausgebildet, wobei die Austrittsöffnung 10 die Form einer Düse 10 aufweist und fest mit dem Schmelztiegel 27 verbunden sein kann, oder wie in dem Ausführungsbeispiel gezeigt, einen wechselbaren Einsatz 11 aufweist, der den Einsatz von unterschiedlichen Düsengeometrien erlaubt.

Die inerte Atmosphäre 22 innerhalb des Reservoirs 7 weist während des Betriebs einen höheren Druck Pᵢ auf, als ein Umgebungsdruck Pₐ außerhalb des Druckkopfes 1, wobei der Druck Pᵢ über das zumindest eine Mittel 42, 43 zur Druckregelung regelbar ist.

Ferner erfasst die Erfindung ein Verfahren zum Betreiben der Vorrichtung 100 zur additiven Fertigung.

In einem ersten Schritt des erfindungsgemäßen Verfahrens, insbesondere während eines Druckvorgangs zur Herstellung eines Werkstücks durch Emittierung von einzelnen Tropfen 15, wird der Druck Pᵢ der inerten Atmosphäre 22 derart über das Mittel 42, 43 zur Druckregelung geregelt, bzw. eingestellt, dass der Druck Pᵢ über dem Umgebungsdruck Pₐ und unter einem Grenzdruck liegt, der ein Emittieren von Tropfen 15 durch die Austrittsöffnung 10 verursacht, bzw. verursachen würde.

Der relativ zum Umgebungsdruck Pₐ höhere Druck Pᵢ der inerten Atmosphäre 22 bietet eine Druckunterstützung für den Kolben 5. Der Druck Pᵢ liegt dabei unter einem Grenzdruck, der einen Ausstoß von Tropfen 15 aus der Austrittsöffnung 10 des Druckkopfes 1 verursachen würde, ohne dass der Kolben 5 einen Hub, bzw. einen Druckimpuls auf die Schmelze 8 ausübt. Der durch das Mittel 42, 43 zur Druckregelung einzustellende Druck Pᵢ der inerten Atmosphäre 22 ist beispielsweise abhängig von dem zu verarbeitenden Metall 14 und der sich daraus ergebenen Viskosität der Schmelze 8. Ferner auch von der Größe der Austrittsöffnung 10.

Der Druck Pᵢ wird so eingestellt, dass nur Tropfen 15 ausgestoßen werden, wenn der Kolben 5 durch den Aktor 12 beaufschlagt wird.

In einem zweiten Schritt des erfindungsgemäßen Verfahrens, insbesondere während eines Befüllvorgangs eines Werkstücks, wird der Druck Pᵢ der inerten Atmosphäre 22 derart über das Mittel 42, 43 zur Druckregelung geregelt, bzw. eingestellt, dass der Druck Pᵢ über dem Umgebungsdruck Pₐ und über dem Grenzdruck liegt, der ein Emittieren von Tropfen 15 durch die Austrittsöffnung 10 verursacht, so dass die flüssige Phase 8 des Metalls 14 durch den von der inerten Atmosphäre 22 ausgeübten Druck durch die Austrittsöffnung 10 emittiert wird.

Der relativ zum Umgebungsdruck Pₐ höhere Druck Pᵢ der inerten Atmosphäre bietet die Möglichkeit, dass der Druckkopf 1 einen kontinuierlichen Ausstoß der flüssigen Phase 8 des Metalls 14, bzw. der Schmelze 8 erzeugt, wobei der Druck Pᵢ der inerten Atmosphäre 22 über einem Grenzdruck zum Ausstoß von Tropfen 15 liegt und zwar derart, dass die flüssige Phase 8 des Metalls 14, bzw. die Schmelze 8 aus der Austrittsöffnung 10 in einen Hohlraum eines Werkstücks gedrückt werden kann. Der Hub, bzw. der Druckimpuls des Kolbens 5 auf die Schmelze 8 wird für diesen Vorgang unterbrochen. Der Kolben 15 kann während der Befüllung des Werkstücks sowohl in als auch außerhalb der Schmelze 8 positioniert sein. Dieses Verfahren ermöglicht es, dass Bereiche in einem Werkstück, bzw. in einem 3D-Druckteil sehr schnell aufgefüllt werden können, wodurch die gesamte Druckzeit für ein Werkstück reduziert werden kann.

In dem erfindungsgemäßen Verfahren, insbesondere während eines Druckvorgangs zur Herstellung eines Werkstücks durch Emittierung von einzelnen Tropfen 15 und Befüllung, wird zur Herstellung des Werkstücks durch Emittierung von einzelnen Tropfen 15 der erste Verfahrensschritt und zur Befüllung des Werkstücks, insbesondere eines Hohlraums eines Werkstücks, der zweite Verfahrensschritt angewendet.

Die oben beschriebenen Verfahren können während eines Druckvorgangs beliebig kombiniert werden.

In einem weiteren Verfahren, insbesondere während eines Entleerungsvorgangs des Druckkopfes 1, wird der Druck Pᵢ der inerten Atmosphäre 22 derart über das Mittel 42, 43 zur Druckregelung geregelt, dass der Druck Pᵢ über dem Umgebungsdruck Pₐ und über dem Grenzdruck liegt, der ein Emittieren von Tropfen 15 durch die Austrittsöffnung 10 verursacht, so dass die flüssige Phase 8 des Metalls 14 durch den von der inerten Atmosphäre 22 ausgeübten Druck durch die Austrittsöffnung 10 emittiert wird, wobei das Reservoir 7 und der Verdrängerraum 21 durch das Gas 55 gespült werden.

Der relativ zum Umgebungsdruck Pₐ höhere Druck Pᵢ der inerten Atmosphäre 22 bietet die Möglichkeit, dass die Schmelze 8 aus dem Druckkopf 1 möglichst vollständig entfernt wird, wobei der Druck Pᵢ der inerten Atmosphäre 22 über einem Grenzdruck zum Ausstoß von Tropfen 15 liegt und zwar derart, dass die flüssige Phase 8 des Metalls 14, bzw. die Schmelze 8 kontinuierlich aus der Austrittsöffnung 10 gedrückt wird. Dazu ist kein zusätzlicher Hub des Kolbens 5 notwendig. Dieser sollte während des Entleerungsvorgangs außerhalb der Schmelze 8 positioniert sein damit keine Reste der flüssigen Phase 8 des Metalls 14 am Stempel 18 des Kolbens 5 verbleiben.

Die Entleerung des Druckkopfes 1, bzw. des Reservoirs 7 und des Verdrängerraums 21, findet statt, indem die noch im Druckkopf 1 befindliche Schmelze 8, bevorzugt am Ende eines Druckvorgangs, aus dem Druckkopf 1, bzw. dem Reservoir 7 und dem Verdrängerraum 21 gespült wird, indem das Inertgas 55 mit dem Druck Pᵢ, bzw. dem Überdruck, bzgl. des Umgebungsdrucks Pₐ des Druckkopfes 1 in den Druckkopf 1 eingebracht wird. Dadurch werden während der Abkühlung und Aushärtung der Schmelze 8 auftretende Spannungen in den mit der Schmelze 8 in Berührung kommenden Bauteilen des Druckkopfes 1 vermieden.

Die oben beschriebenen Verfahren können zum Betreiben der Vorrichtung 100 zur additiven Fertigung einzeln oder in Kombination nacheinander ausgeführt werden.

## Patentansprüche

1. Verfahren zum Betreiben einer Vorrichtung (100) zur additiven Fertigung von dreidimensionalen Werkstücken, während eines Druckvorgangs zur Herstellung eines Werkstücks durch Emittierung von einzelnen Tropfen (15) und Befüllung, wobei die Vorrichtung (100) ein 3D-Metalldrucker ist, umfassend einen Druckkopf (1) und eine Vorrichtung (40) zur Erzeugung einer inerten Atmosphäre (22) innerhalb des Druckkopfes (1) durch ein Gas (55), insbesondere Inertgas, wobei der Druckkopf (1) ein Gehäuse (3), eine Vorrichtung (28) zur Zuführung eines Metalls (14), einen Kolben (5), ein Reservoir (7) mit einer Austrittsöffnung (10) und eine Aktorvorrichtung (12) zur Verschiebung des Kolbens (5) umfasst, wobei das Reservoir (7) einen Schmelzbereich (20) und einen Verdrängerraum (21) für eine flüssige Phase (8) des Metalls (14) aufweist, wobei der Schmelzbereich (20) an der inerten Atmosphäre (22) angrenzt und mit dem Verdrängerraum (21) derart verbunden ist, dass durch die Verschiebung des Kolbens (5) die flüssige Phase (8) des Metalls (14) zum Durchtritt durch die Austrittsöffnung (10) anregbar ist, wobei die Vorrichtung (40) zur Erzeugung der inerten Atmosphäre (22) außerhalb des Druckkopfes (1) angeordnet ist, wobei sie einen Speicher (41), zumindest ein Mittel (42, 43) zur Druckregelung und eine Gasleitung (50, 51, 52) umfasst,
**dadurch gekennzeichnet, dass**
zur Herstellung des Werkstücks durch Emittierung von einzelnen Tropfen (15) der Druck (Pᵢ) der inerten Atmosphäre (22) derart über das Mittel (42, 43) zur Druckregelung geregelt wird, dass der Druck (Pᵢ) über dem Umgebungsdruck (Pₐ) und unter einem Grenzdruck liegt, der ein Emittieren von Tropfen (15) durch die Austrittsöffnung (10) verursacht und zur Befüllung des Werkstücks, insbesondere eines Hohlraums eines Werkstücks, der Druck (Pᵢ) der inerten Atmosphäre (22) derart über das Mittel (42, 43) zur Druckregelung geregelt wird, dass der Druck (Pᵢ) über dem Umgebungsdruck (Pₐ) und über dem Grenzdruck liegt, der ein Emittieren von Tropfen (15) durch die Austrittsöffnung (10) verursacht, so dass die flüssige Phase (8) des Metalls (14) durch den von der inerten Atmosphäre (22) ausgeübten Druck durch die Austrittsöffnung (10) emittiert wird.

## Claims

1. Method of operating an apparatus (100) for additive manufacture of three-dimensional workpieces, during a printing operation for production of a workpiece by emitting individual droplets (15) and filling, where the apparatus (100) is a 3D metal printer, comprising a printhead (1) and an apparatus (40) for generating an inert atmosphere (22) within the printhead (1) by means of a gas (55), especially inert gas, where the printhead (1) comprises a housing (3), an apparatus (28) for supply of a metal (14), a piston (5), a reservoir (7) having an exit orifice (10) and an actuator apparatus (12) for moving the piston (5), where the reservoir (7) has a melt region (20) and a displacement chamber (21) for a liquid phase (8) of the metal (14), where the melt region (20) adjoins the inert atmosphere (22) and is connected to the displacement chamber (21) in such a way that the movement of the piston (5) can induce the liquid phase (8) of the metal (14) to pass through the exit orifice (10), where the apparatus (40) for generating the inert atmosphere (22) is disposed outside the printhead (1), where it comprises a storage means (41), at least one means (42, 43) of pressure control, and a gas conduit (50, 51, 52), **characterized in that**
for production of the workpiece by emission of individual droplets (15), the pressure (Pᵢ) of the inert atmosphere (22) is controlled by the means (42, 43) of pressure control in such a way that the pressure (Pᵢ) is above the ambient pressure (Pₐ) and below a limiting pressure that causes emission of droplets (15) through the exit orifice (10), and for filling of the workpiece, especially a cavity of a workpiece, the pressure (Pᵢ) of the inert atmosphere (22) is controlled by the means (42, 43) of pressure control in such a way that the pressure (Pᵢ) is above the ambient pressure (Pₐ) and above the limiting pressure that causes emission of droplets (15) through the exit orifice (10), such that the liquid phase (8) of the metal (14) is emitted through the exit orifice (10) by virtue of the pressure exerted by the inert atmosphere (22) .

## Revendications

1. Procédé d'exploitation d'un dispositif (100) pour la fabrication additive de pièces tridimensionnelles, pendant une opération d'impression pour la fabrication d'une pièce par émission de gouttes individuelles (15) et remplissage, le dispositif (100) étant une imprimante 3D à métal, comprenant une tête d'impression (1) et un dispositif (40) pour générer une atmosphère inerte (22) à l'intérieur de la tête d'impression (1) par un gaz (55), notamment un gaz inerte, la tête d'impression (1) comprenant un boîtier (3), un dispositif (28) pour amener un métal (14), un piston (5), un réservoir (7) avec une ouverture de sortie (10) et un dispositif d'actionnement (12) pour déplacer le piston (5), le réservoir (7) présentant une zone de fusion (20) et une chambre de refoulement (21) pour une phase liquide (8) du métal (14), la zone de fusion (20) étant adjacente à l'atmosphère inerte (22) et reliée à la chambre de refoulement (21) de telle sorte que le déplacement du piston (5) permet d'inciter la phase liquide (8) du métal (14) à traverser l'ouverture de sortie (10), le dispositif (40) de génération de l'atmosphère inerte (22) étant agencé à l'extérieur de la tête d'impression (1), comprenant un accumulateur (41), au moins un moyen (42, 43) de régulation de pression et une conduite de gaz (50, 51, 52),
**caractérisé en ce que**
pour la fabrication de la pièce par émission de gouttes individuelles (15), la pression (Pᵢ) de l'atmosphère inerte (22) est régulée par le moyen de régulation de pression (42, 43) de telle sorte que la pression (Pᵢ) soit supérieure à la pression ambiante (Pₐ) et inférieure à une pression limite qui provoque une émission de gouttes (15) à travers l'ouverture de sortie (10) et, pour le remplissage de la pièce, notamment d'une cavité d'une pièce, la pression (Pᵢ) de l'atmosphère inerte (22) est régulée par le moyen de régulation de pression (42, 43) de telle sorte que la pression (Pᵢ) soit supérieure à la pression ambiante (Pₐ) et à la pression limite qui provoque l'émission de gouttes (15) à travers l'ouverture de sortie (10), de telle sorte que la phase liquide (8) du métal (14) est émise à travers l'ouverture de sortie (10) par la pression exercée par l'atmosphère inerte (22) .
